# EUROPEAN PATENT APPLICATION

(11) **EP 3 395 169 A1**
(43) Date of publication of application: **31.10.2018**
(21) Application number: 18172437.8
(22) Date of filing: 19.05.2015
(51) Int. Cl.: A01K 45/00

(54) **METHOD AND DEVICE FOR CONDITIONAL IN OVO INJECTION**

(30) Priority: 19.05.2014 US 201462000245 P
(62) Divisional of application: 15728270.8
(71) Applicant: Merial Inc., Duluth, GA 30096 (US)
(72) Inventor: LESLIE, Christopher Davis, Cleveland, GA 30528 (US); NGUYEN, Chien Dinh, Braselton, GA 30517 (US); BEVENSEE, Erich, Frisco, TX 75035 (US)
(74) Representative: D Young & Co LLP

(57) **Abstract**

The present invention provides *in ovo* injection devices, including a novel vaccine/substance conservation valve (VCV), a needle depth adjuster (NDA), and methods for selectively delivering vaccines and other substances to eggs in the context of poultry hatcheries. The valve of the present invention allows for the conditional dispensing of vaccines and other substances dependent upon the presence or absence of an egg. When an egg is present, the valve becomes activated, allowing vaccines or other substances to be injected. When an egg is absent, the valve is not activated, thus vaccines and other valuable substances are conserved. The NDA allows embryonated eggs to be more safely injected by reducing the depth of needle penetration, particularly in smaller eggs.

## Description

### CROSS-REFERENCE TO RELATED APPLICATIONS

This application claims benefit of US provisional application serial No. 62/000,245, filed 19 May 2014, and incorporated by reference herein in its entirety.

### INCORPORATION BY REFERENCE

Any documents referenced herein are incorporated by reference in their entirety.

### FIELD OF THE INVENTION

The present invention relates to *in ovo* injection devices, particularly ones that are designed to conditionally dispense vaccines and other substances only when an egg (within a flat of eggs) is present beneath its corresponding *in ovo* injector. The invention further relates to *in ovo* injection devices having one or more of the following features: 1) needle depth regulation; 2) egg flat movement regulation; 3) egg flat retention means; and 4) *in ovo* injector array vertical and lateral alignment regulation.

### BACKGROUND OF THE INVENTION

In poultry hatcheries, there is an increasing need to inject one or several substances into the eggs, a process commonly referred to as *"In ovo* Injection". Injections of various substances into avian eggs have been employed to decrease post-hatch and/or field mortality rates, increase the potential growth rates or eventual size of the resulting chicken, and even to influence the gender determination of the embryo. Examples of substances that have been proposed as viable treatment alternatives for delivery via *in ovo* injection of avian embryos include live culture vaccines, antibiotics, vitamins, and even competitive exclusion media (a live replicating organism). Specific examples of treatment substances are described in U.S. Pat. No. 4,458,630 to Sharma et al, and U.S. Pat. No. 5,028,421 to Fredericksen et al.

Bird production requires several important steps. First, eggs are placed in incubators for a specified period of time. Next, several days before hatching, they are transferred into hatchers. During the transfer from incubators to hatchers several operations are routinely conducted, which include, but are not limited to, candling, egg removing, vaccination and transfer. Candling is typically controlled by a "candling" machine. The process allows for the detection of embryos within eggs. Ideally, only embryonated eggs, those containing embryos, should be given costly vaccines and other substances. After the candling operation an removing operation making up part of the candling machine removes the bad eggs from the incubator trays. Finally, the transfer machine takes hold of embryonated eggs form the incubator trays and transfers them into the hatcher boxes.

Just after the egg remover machine step, it is possible to inject one or several substances into the eggs with an *in ovo* injection device or vaccinator. In general, *in ovo* injection devices / vaccinators are equipped with several tens of injectors, as disclosed by US patent number 7,360,500 to Correa et al. However, *in ovo* injection is associated with multiple technical challenges, some of which are under-addressed by currently available technology. As an example, the process of *in ovo* injection is optimized when there is consistency in egg size, shape, weight, location, etc. Egg size tends to be directly related to the age of the hen; the younger the layer flock the smaller the egg's height and diameter. Variability of egg dimensions coupled with their variable orientation/placement in incubator trays presents an increased challenge to vaccinating within a target area to maximize vaccine effectiveness and egg/bird hatchability. The incubator tray is designed to hold the eggs just south of their equator on a fixed diameter. The smaller the egg diameter, the deeper it will sit on the incubator tray. Conversely, the larger the egg diameter the higher it will sit on the incubator tray. Hence, this particular challenge to effective *in ovo* injection is not solely based upon the size differential between eggs, but also upon the way the eggs are held/oriented in their trays for the purpose of incubating.

The *in ovo* injection technology available today uses a floating injector that adjusts to the height variance from the top of the egg as it sits in the incubator tray, allowing each egg to be vaccinated to a consistent depth regardless of the egg size (US 7,360,500 to Correa). However, the percentage of penetration depth is in relation to egg orientation, length and height of egg in the tray, which in turn is influenced by the egg diameter and tray design . Consider, for example, a needle penetration depth equal to one inch for an egg that is two inches tall. Said needle penetration depth is herein defined as fifty percent egg penetration. Similarly, a needle penetration depth of one inch for an egg measuring one and one-half inches tall equates to seventy-five percent egg penetration. The difference between fifty percent penetration and seventy-five percent penetration can have a dramatic effect on birds yields, with the latter percent penetration potentially causing higher rates of damage to the developing embryos.

Existing *in ovo* injection devices / vaccinators cannot automatically adjust the percent penetration depth of their injection needles to accommodate the many different-sized/-oriented eggs. This inability to control relative needle penetration reduces accuracy of injection site. This can lead to problems such as needle contact with vital internal organs causing mortality and reduced biological effectiveness during the *in ovo* vaccination process. Overall, when currently available injectors are presented with an assortment of non-uniformly-sized eggs, vaccines or other valuable substances are wasted, and egg hatchability is reduced. In addition, bird yields are reduced due to ineffective vaccination and/or delivery of other valuable substances, compounding the hatchery's losses. Finally, it is currently known and accepted by the industry that a higher mortality rate results when vaccinating eggs from young flocks (for example, twenty-six to thirty-two weeks of age). This fact is likely due in part to the relatively smaller sizes of young flock-produced eggs, as compared with the eggs produced by older flocks, and the associated egg size complications (discussed above).

Some *in ovo* injection systems have been described. For example, US 7,438,019B2 ("the '019 patent") and WO2008098731A1 (the subject matter now issued in French patent FR2912599B1, "the '599 patent") each disclose an injector equipped with an integrated valve for feeding the injection systems. The '019 patent differs from the '599 patent in that the '019 patent discloses an invention that is additionally able to measure the fluid quantity to be injected. However, the integrated nature of these systems contributes to them being significantly costly to produce, own, and maintain. For example, if there is a mechanical problem, the complete injector must be replaced.

Therefore, there is a clear and long-felt need for cost-effective *in ovo* injection / vaccination devices that adjust the percent penetration depth of *in ovo* injection needles in response to egg size and orientation on their incubation trays. A preferred *in ovo* injection device would be capable of injecting vaccines and other valuable substances to eggs at a consistent percent egg penetration, regardless of egg size or orientation. A preferred *in ovo* injection device would only dispense liquids when positioned in proper proximity to an embryonated egg. There is also a clear and long-felt need for cost-effective *in ovo* injection / vaccination devices that conditionally dispense valuable liquids, including vaccines, only when an egg is present, so another preferred *in ovo* injection device would be capable of conditionally injecting vaccines and other valuable substances dependent upon egg presence.

### SUMMARY OF THE INVENTION

A first aspect of the present invention provides an improved *in ovo* injection machine, comprising a novel "pneumatic logic circuit," and which is designed to conditionally dispense vaccines and other substances only when an egg (within a flat of eggs) is present beneath its corresponding *in ovo* injector. The machine is equipped with an array of conditional *in ovo* injectors, which only deploy their needles and dispense the vaccines or other substances when an egg is present beneath them. Prior to the conditional injectors being displaced by making physical contact with the eggs (i.e. when a lifter moves an array of injectors to meet / contact eggs in an incubator flat or tray), the machine exists in a first state, wherein a pneumatic circuit is closed such that the injector needles cannot be deployed, and the vaccine or liquid substance cannot be dispensed/injected. When an egg physically displaces a conditional injector, the injector's movement actuates a switch to open the pneumatic circuit, such that in a subsequent injection step, that injector's needle may now be deployed and the vaccine or substance may now be injected. Any conditional injectors that have not been displaced by an egg (i.e. no egg was present beneath its corresponding injector) will not deploy their injection needles, nor will they dispense the vaccine or other substance.

Now that the circuit according to the present invention has been developed, it can be easily and cost-effectively adapted for use with any *in ovo* injection system. For example, the disclosed devices and methods may be used with *in ovo* injectors/vaccinators as disclosed by US 7,360,500 (to Correa), or they may be readily adapted for use with other injection systems.

A second aspect of the invention relates to the conditional *in ovo* injector itself. Each injector is equipped with a means for conditionally activating a pneumatic logic circuit. When an egg displaces an injector, the activation means is also moved, such that the pneumatic logic circuit is activated. In an embodiment, the activation means is a magnet, contained on or within the conditional injector, and which is part of a reed-type magnetic switch. In an embodiment, displacement of the injector by the physical contact with an egg activates the reed switch, thereby opening the pneumatic logic circuit, and allowing the subsequent deploying of the injector's injection needle, and dispensing of vaccine or other substance. Thus, in an embodiment, the conditional injector is operably connected to the pneumatic logic circuit by a reed switch, such that when an array of conditional injectors is lowered over a flat of eggs, only injectors that physically contact-and are displaced by-the eggs will be able to subsequently deploy their injection needles and dispense vaccine or other substances. Thus, in a particular embodiment, the default state of the machine may be characterized as a constitutive block of injection needle deployment and vaccination. Now that the invention has been disclosed, the skilled person can easily reverse this logic (i.e. make the default case be injection needle deployment and vaccination) with the exercise of non-routine work.

A third aspect of the present invention provides a novel injection needle depth regulator, for use with *in ovo* injection devices, which automatically adjusts the penetration depth of injection needles depending upon the size of the eggs present. The automatic injection depth regulator reduces the number of ineffective injections and minimizes the chance of harming the developing embryo, both of which reduce overall costs associated with *in ovo* injection. Injection depth regulators according to the present invention can be easily and cost-effectively adapted for use with existing *in ovo* injectors.

Thus, in an embodiment, the improved *in ovo* injection device is capable of delivering vaccines and other valuable substances to desired target areas regardless of egg size, and to deliver said substances conditionally only when an egg is present in an incubator tray.

In another embodiment, *in ovo* injector needles are prevented from reaching, touching or rupturing critical vital organs of embryos, which may be located south of the equator on the embryonated egg.

Finally, the improved *in ovo* injection machine may be equipped with one, several, or all of the following additional features: 1) egg flat movement regulation; 2) egg flat retention (to prevent the lighter flats from being lifted during egg transfer); and 3) *in ovo* injector array vertical and lateral alignment regulation.

These and other embodiments are disclosed or are obvious from and encompassed by the following Detailed Description.

### BRIEF DESCRIPTION OF THE DRAWINGS

The following detailed description, given by way of example, but not intended to limit the invention solely to the specific embodiments described, may best be understood in conjunction with the accompanying drawings, in which:
FIG. 1 is a partial sectional view of an injector according to US 7,360,500 which may be combined with a conditional *in ovo* injector or a needle depth adjuster according to the present invention;
FIG. 2 is a sectional view of the injector and support plate shown in FIG. 1, but with the injection needle assembly in an extended position;
FIG. 2A provides a plurality of injectors in arranged perpendicularly within an injector support plate;

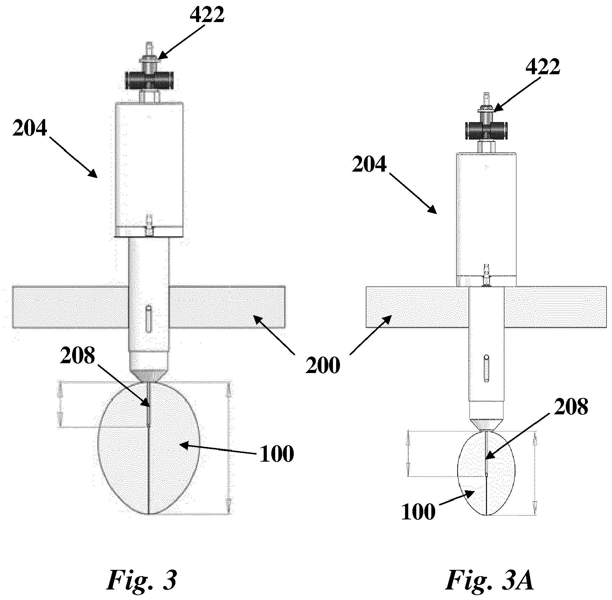

FIG. 3 provides a partial sectional view of an *in ovo* injector positioned to inject a larger egg at a percent egg penetration of less than about 50%;
FIG. 3A provides a partial sectional view of an *in ovo* injector positioned to inject a smaller egg at a percent egg penetration of more than about 50%;
FIG. 4 provides a partial sectional view of an *in ovo* injector equipped with a needle depth adjuster (NDA) in accordance with the present invention;
FIG. 5 provides a side view of an *in ovo* injector equipped with a needle depth adjuster (NDA) in accordance with the present invention. Also depicted is a relatively small embryonated egg, whose presence has allowed the injector to travel to its maximum extended position, while at the same time, the NDA has restricted the needle penetration depth to its minimum (NPDₘᵢₙ). The developing embryo 800 is unharmed by the needle;
FIG. 5A provides a side view of an *in ovo* injector equipped with a needle depth adjuster (NDA) in accordance with the present invention. Also depicted is a relatively medium-sized embryonated egg, whose presence has allowed the injector to travel to a "midway" extended position, while at the same time, the NDA has restricted the needle penetration depth to a depth minimally greater than NPDₘᵢₙ and maximally less than NPDₘₐₓ. The developing embryo 800 is unharmed by the needle;
FIG. 5B provides a side view of an *in ovo* injector equipped with a needle depth adjuster (NDA) in accordance with the present invention. Also depicted is a relatively large embryonated egg, whose presence has allowed the injector to travel to a minimum extended position, thus the NDA has not been contacted by the clip 422, and so the needle penetration depth is unrestricted and is equal to NPDₘₐₓ. The developing embryo 800 is unharmed by the needle;
FIG. 5C provides a side view of an *in ovo* injector equipped with a needle depth adjuster (NDA) in accordance with the present invention, wherein the injector head is shown in multiple extended positions;
FIG. 5D provides a top view of the NDA 110;
FIG. 5E provides a bottom view of the NDA 110;
FIG. 6 provides a sectional view of an injection device equipped with a needle depth adjuster (NDA) in accordance with the present invention and a representative large-sized egg;
FIG. 6A provides a sectional view of an injection device equipped with a needle depth adjuster (NDA) in accordance with the present invention and a representative medium-sized egg;
FIG. 6B provides a sectional view of an injection device equipped with a needle depth adjuster in accordance with the present invention and a representative small-sized egg;

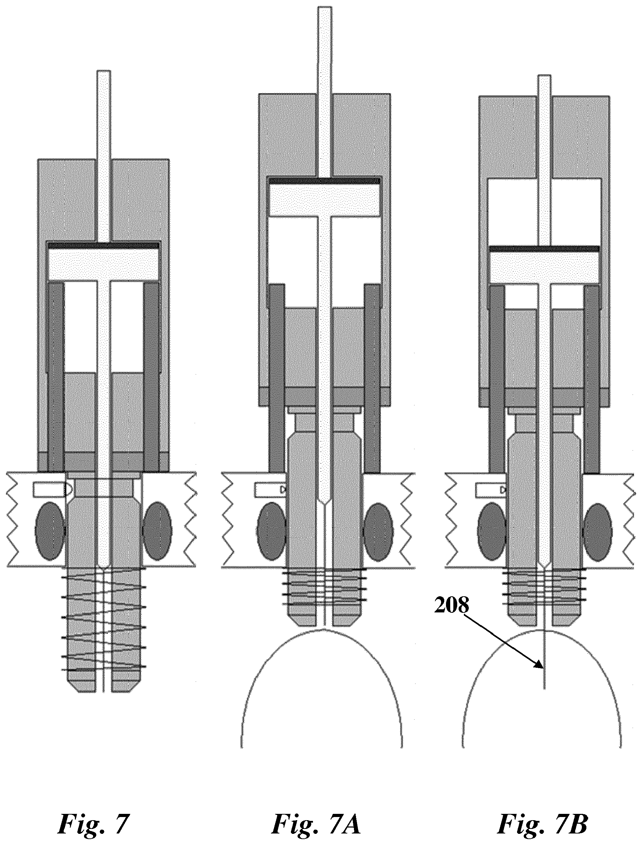

FIG. 7 provides a sectional view of an injection device equipped with a vaccine conservation valve (VCV) and an alternate NDA in accordance with the present invention. Since no egg is present, the injector will not dispense vaccine or other substances during this particular injection cycle;
FIG. 7A provides a sectional view of an injection device equipped with a vaccine conservation valve (VCV) and an alternate NDA in accordance with the present invention. The injector head has made contact with a medium-sized egg, thereby activating the VCV, but the injector piston has not yet injected vaccine or other substances;
FIG. 7B provides a sectional view of an injection device equipped with a VCV and an alternate NDA in accordance with the present invention. The injector head has made contact with a medium-sized egg, thereby activating the VCV, and in this depiction, the injector piston has plunged downward to inject the egg. Since the NDA is present, the needle penetration depth (NPD) has been restricted;
FIG. 8 provides a detailed diagram of an early design of the conditional *in ovo* injection device / vaccinator. The locations of several important components are indicated, including the vaccine in/out fluid conduits, the piston, the vaccine conservation valve (VCV), the needle, the spring, and the injector lock;
FIG. 9 provides a detailed diagram of the VCV of FIG. 8 with the further addition of an egg and the presence of liquid in the "vaccine out" fluid conduit. When an egg is present, the vaccine conservation valve (VCV) allows the dispensing of vaccine or other liquid;
FIG. 10 provides a detailed, close-up diagram of the "vaccine conservation valve;"

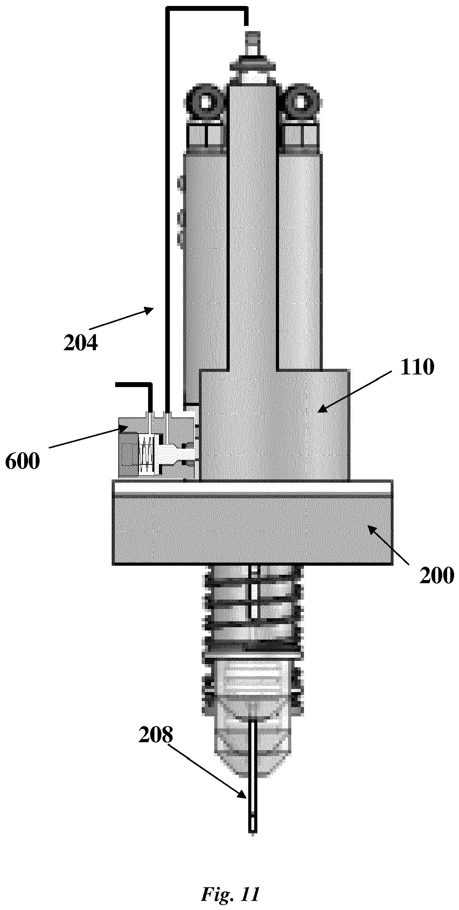

FIG. 11 provides a general view of an *in ovo* injector equipped with both the needle depth adjuster (NDA) and the vaccine conservation valve (VCV);
FIG. 12 illustrates an *in ovo* vaccination device equipped with a 4-post lifter assembly, which lifts and lowers the array of injector evenly, to ensure a consistent injection angle across the injector array;

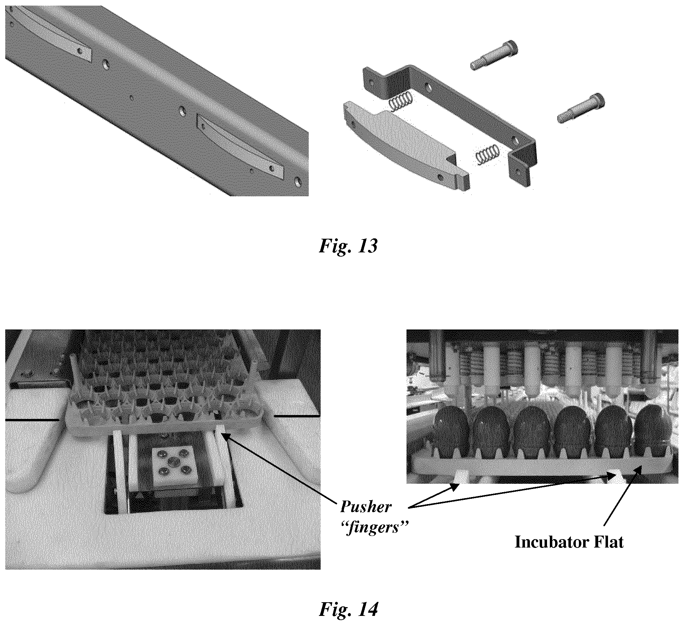

FIG. 13 illustrates a front injection clamp, which holds egg incubation trays in place for consistent injection of each egg. The clamp prevents side-to-side movement to allow consistent injection; the spring rail adjustment for the front injection clamp holds the egg incubation flat in place to ensure a consistent injection sight for each egg;
FIG. 14 illustrates an extended pusher, which prevents operators from putting their hands under the gripper plate and/or prevents the operators from loading the incubator flats too roughly (which causes egg-reorientation and hatch efficiency losses). Once the tray is slid past the indicated point, the extended pusher fingers then begin to auto load the flat into the *in ovo* injection device. After the first pushers move the tray sufficiently far into the *in ovo* injection device, a second set of pushers move the tray into injection position (i.e. beneath the array of *in ovo* injectors).

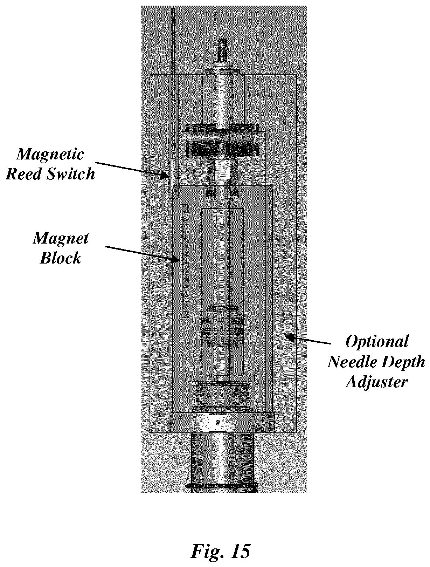

FIG. 15 illustrates an *in ovo* injector equipped with a magnet (as a component of a magnetic Reed switch) and an optional injection needle depth adjuster (NDA). When no egg is present in the incubator tray (i.e. has been removed by a prior candling step), the injector will not be displaced vertically. In such case, there is no mechanical movement of the injector (ref magnet) in proximity to the bracket (ref reed switch) and no electronic signal is sent to activate the pneumatic circuit (e.g. no activation of the reed switch, no needle extension, and no delivery of fluids);

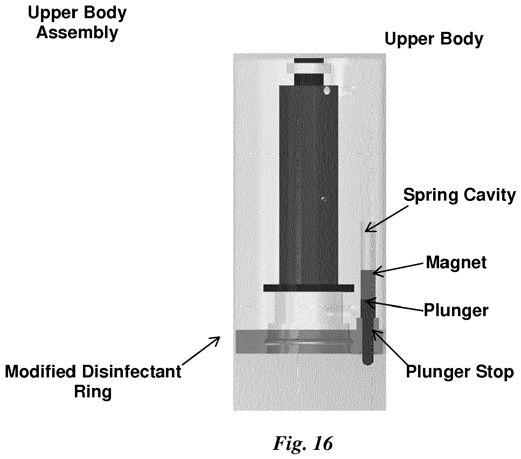

FIG. 16 illustrates a preferred embodiment of a conditional *in ovo* injector. Here, the switch has been moved inside the injector, instead of being placed on the injector and bracket. The new version eliminates the need for a bracket and reduces the risk that components catch on one another, thus reducing the error rate;

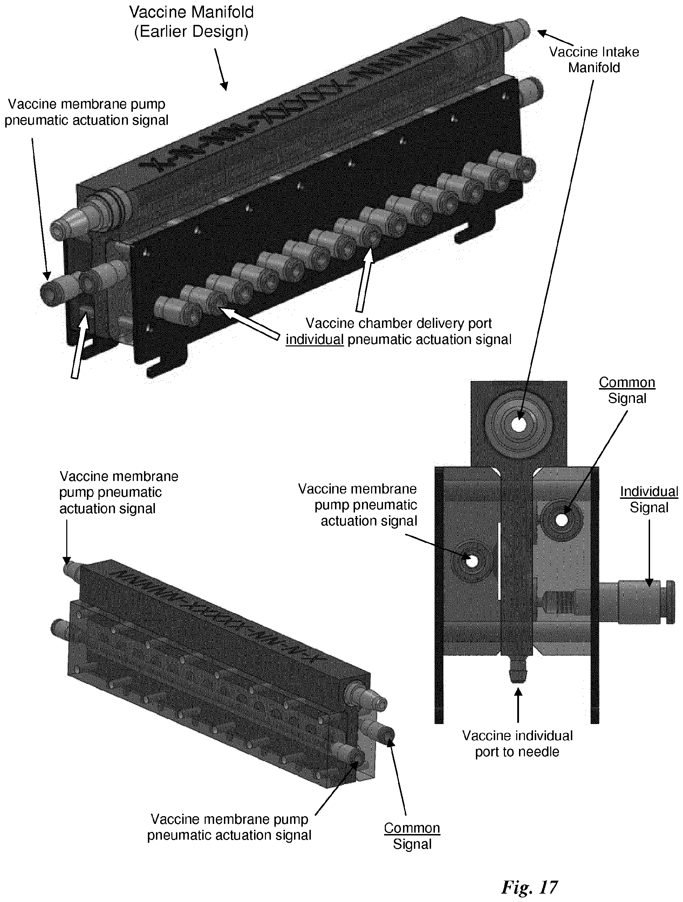

FIG. 17 illustrates a conditional vaccine manifold according to the invention, comprising openings for receiving a vaccine pump individual pneumatic actuation signal; vaccine directional valves, in fluid connection with a common pneumatic actuation signal; a vaccine manifold intake, which is in fluid connection with a vaccine reservoir (i.e. vaccine bag or other supply of vaccine); and a plurality of vaccine exhaust ports;

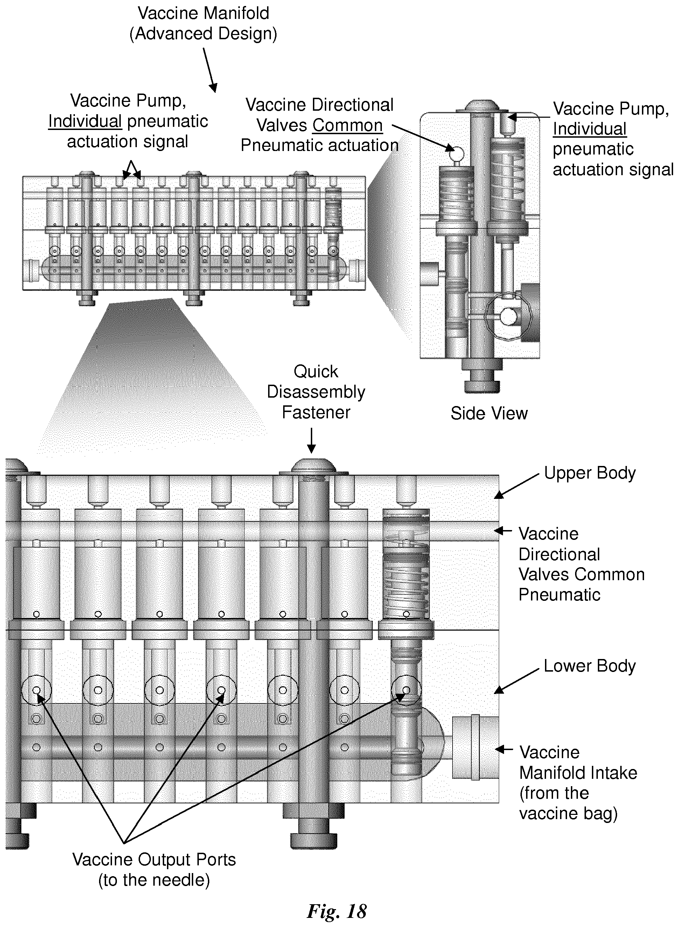

FIG. 18 illustrates an advanced conditional vaccine manifold, according to the invention, comprising openings for receiving a vaccine pump individual pneumatic actuation signal; vaccine directional valves, in fluid connection with a common pneumatic actuation signal; a vaccine manifold intake, which is in fluid connection with a vaccine reservoir (i.e. vaccine bag or other supply of vaccine); and a plurality of vaccine output ports;

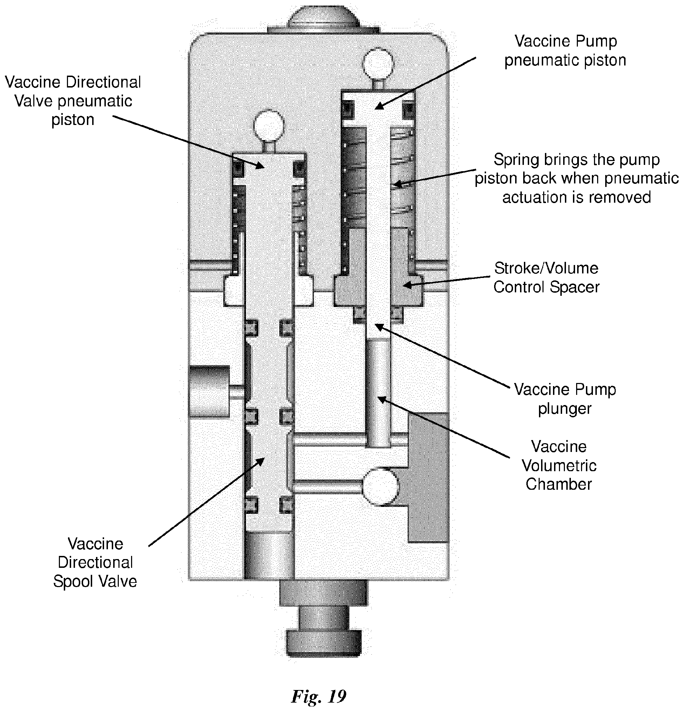

FIG. 19 is an exploded view of the conditional vaccination manifold, comprising: a vaccine pump pneumatic piston; a spring that brings the pump piston back when the pneumatic actuation is withdrawn; a stroke/volume control spacer; a vaccine pump plunger; a vaccine volumetric chamber; a vaccine direction spool valve; and a vaccine directional valve pneumatic piston;

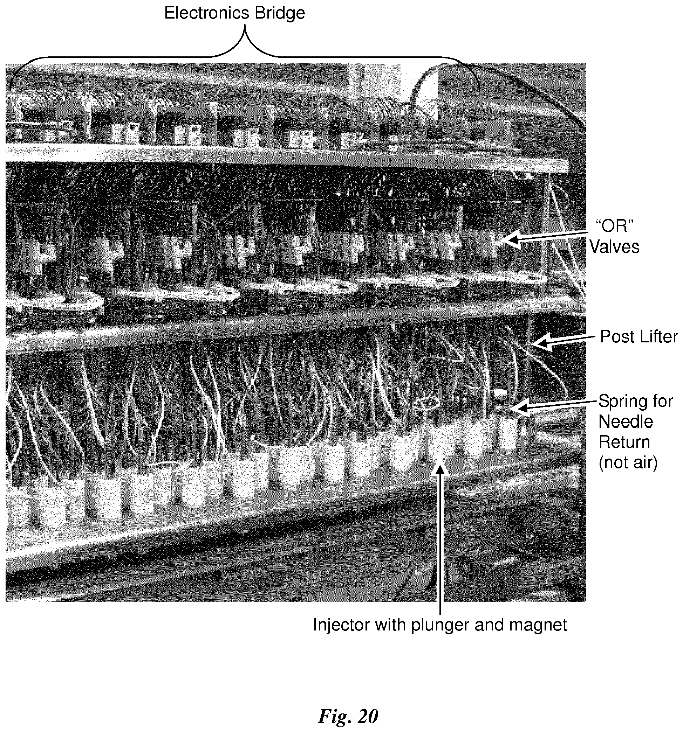

FIG. 20 is an image of a conditional *in ovo* injector equipped with a conditional vaccine manifold, conditional vaccine pneumatic logic circuits according to the invention, and a 4-post lifter assembly;

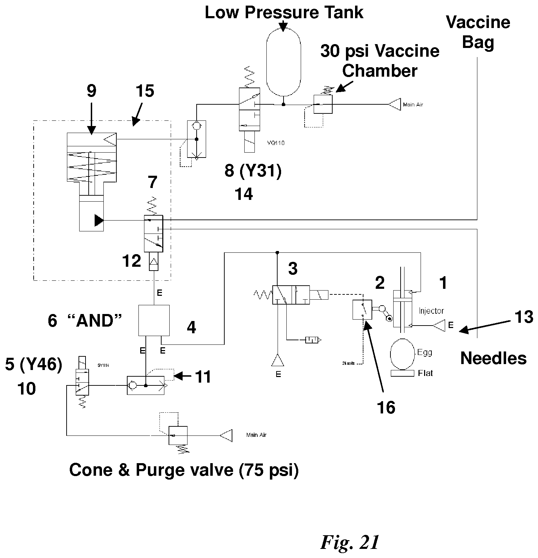

FIG. 21 depicts the conditional vaccination pneumatic circuit logic; System Idle, egg loaded under injectors (1); Egg displaces Injector from switch (2); Switch Actuates Injector Valve (3); Pressure for needles down is applied. Injector pushes needle down. One of the input on AND valve gets pressure (4); Y46 is actuated to pilot vaccine directional valve (5); AND logic valve now open; allows pilot for vaccine directional valve (6); Vaccine directional valve shifts to connect vaccine chamber with needle (7); Y31 is actuated to power vaccine pump (8); Vaccine pump delivers vaccine to needle (9); Y46 is deactivated to shift Vaccine directional valve (10); Quick exhaust valve relieves pressure from logic AND valve (11); Vaccine directional valve shifts to isolate vaccine pump from needle. Connects pump to the vaccine bag (12); Pressure for needles UP is applied. Injector pulls needle Up (13); Y31 is deactivated to remove power from vaccine pump (14); Quick exhaust valve relieves pressure from Pump. Vaccine Pump pulls fluid from bag by spring action (15); Egg moves away from injector. Switch open circuit to deactivate injector valve (16), completing the cycle;

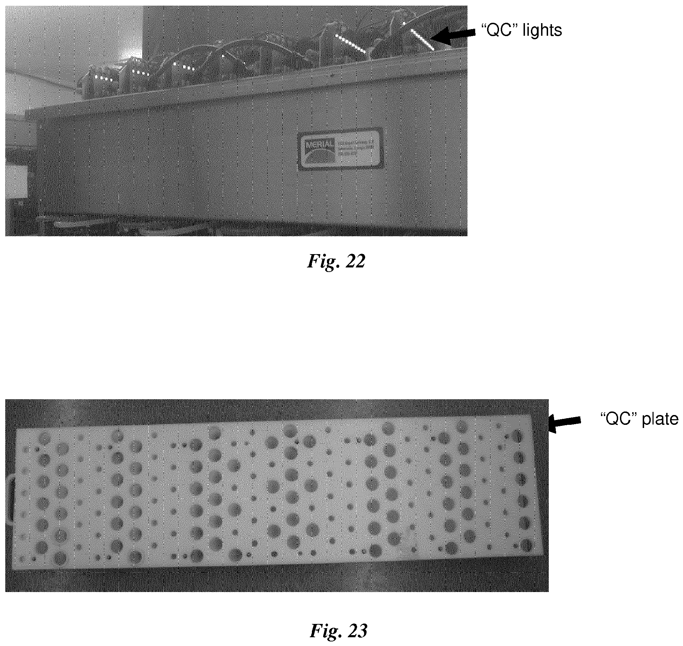

FIG. 22 illustrates a conditional *in ovo* injection device equipped "QC" lights, which provide feedback as to whether the magnetic switch is depressed by the presence of an egg. Either logic may be used (i.e. light on = egg is present, or vice versa, as most times the egg is present);
FIG. 23 illustrates a "QC" plate, which may be used to verify whether the injectors are being prevented from deploying needles and expelling fluid when no egg is present beneath the injector(s).

### DETAILED DESCRIPTION

The term "equator" as used herein to describe a region of an egg is defined herein as having its ordinary meaning in the art, namely the longest possible ellipse around the egg which is perpendicular to the egg's long axis.

It is noted that in this disclosure and particularly in the claims and/or paragraphs, terms such as "comprises", "comprised", "comprising" and the like can have the meaning attributed to it in U.S. Patent law; e.g., they can mean "includes", "included", "including", and the like; and that terms such as "consisting essentially of' and "consists essentially of' have the meaning ascribed to them in U.S. Patent law, e.g., they allow for elements not explicitly recited, but exclude elements that are found in the prior art or that affect a basic or novel characteristic of the invention.

The term "birds", as used herein, is intended to include males or females of avian species, but is primarily intended to encompass poultry which are commercially raised for eggs or meat, or to breed to produce stock for eggs or meat. Accordingly, the term "bird" is particularly intended to encompass either gender or any bird, including without limitation, chickens, ducks, turkeys, geese, quail, ostriches, pheasants, and the like. The present invention may be practiced with any type of bird egg.

As used herein, "NDA" means "needle depth adjuster;" NPD means "needle penetration depth;" NPDₘₐₓ means "maximum needle penetration depth;" NPDₘᵢₙ means "minimum needle penetration depth;" "VCV" means "vaccine conservation valve;" "PEPD" means "percent egg penetration depth;" and "PLC" means "pneumatic logic circuit."

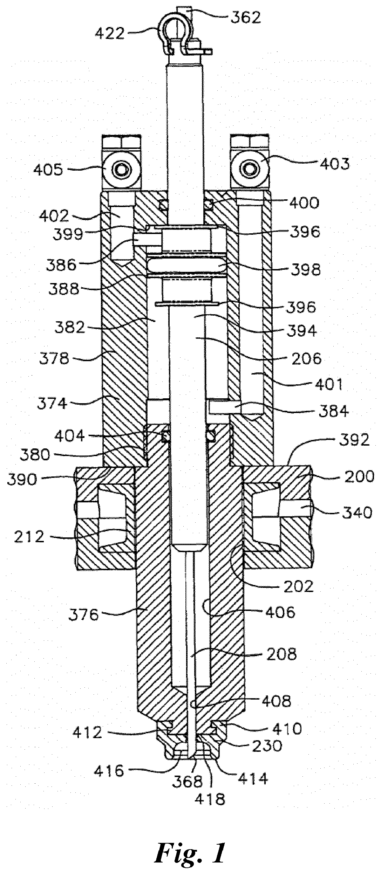

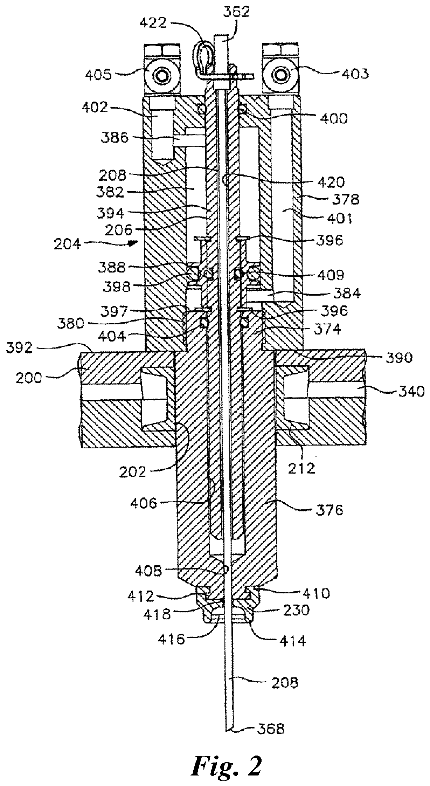

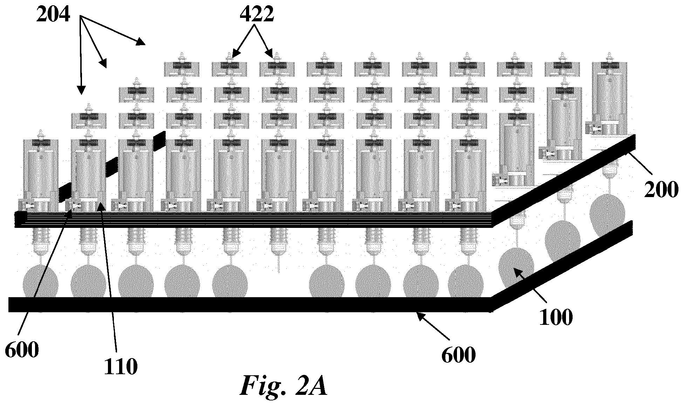

For the sake of clarity, one injector **204** (in accordance with US 7,360,500 to Correa) positioned in its respective opening **202** of the injector support plate **200** is shown in Figures **1** and **2** with the injection needle **208** in its retracted position in Figure **1** and in an extended position in Figure **2****.** Each injector **204** includes a cylindrical body or housing **374** made up of a cylindrical lower body portion **376** and a cylindrical upper body portion **378** which are connected preferably by threads **380.** When assembled, the cylindrical body **374** defines an air chamber **382** with an air up port **384** at the lower end and air down port **386** at its upper end on either side of an actuating piston **388,** as will be described below. The air ports **384** and **386** are connected to vertical air channels **401** and **402,** respectively, through upper body portion **378** to air hose connectors **403** and **405** mounted on top of the injector body **374.**

The gripper ring **212** is mounted in the support plate **200** such that the lower body portion **376** of the cylindrical body **374** is free to move vertically within the plate opening **202.** The upper body portion **378** has a larger diameter than the lower body portion **376** so as to define a ledge **390** when the portions **376** and **378** are assembled. When the injector **204** is resting freely in opening **202,** such as when the injector is not in contact with an egg, the ledge **390** rests on the top surface **392** of the support plate **200** around opening **202.**

Each injector **204** includes an injection needle assembly **206** which is vertically movable within the cylindrical body **374.** The injection needle assembly **206** includes the injection needle **208** which is surrounded along a major portion of its length by a needle guide sleeve **394** and the piston **388** which is mounted on the sleeve **394** and captured in position by upper and lower retaining rings **396.** The outer periphery of piston **388** includes a conventional ring seal **398** which seals the piston **388** against the inner cylindrical wall of air chamber **382.** A second conventional ring seal **409** is fitted in an appropriate recess to seal the inside of piston **388** against the outside wall of guide sleeve **394.**

The upper end of chamber **382** is sealed by another conventional ring seal **400** captured in the upper end of cylindrical upper body portion **378** which seals against the outer cylindrical surface of needle guide sleeve **394.** The lower end of chamber **382** is sealed by a fourth conventional ring seal **404** captured in the top end of cylindrical lower body portion **376** which also seals against the sleeve outer surface. The cylindrical lower body portion **376** has a longitudinal cylindrical bore **406** extending through its center which has a diameter only slightly larger than the diameter of needle guide sleeve **394.** The cylindrical bore **406** serves to guide the injection needle assembly **206** as it moves up and down within the cylindrical body **374.** The cylindrical bore **406** terminates toward the lower end of the cylindrical lower body portion **376** to define a reduced diameter bore **408** sized to receive only the needle **208** therethrough.

The cylindrical body **374** is preferably made from high density plastic material, while the needle guide sleeve **394** and piston **388** are preferably made of stainless steel. The O-rings **398, 400** and **404** are all conventional and made from standard elastomeric materials. The needle **208** is preferably made of stainless steel, with or without a reinforced titanium tip at the 20 piercing and injecting end **368.**

A stabilizing nipple **230** is sealingly secured to the lowermost end of the cylindrical lower body portion **376** by a snap fitting **410** over cylindrical flange **412** of the lower body portion **376.** The lower edge **414** of the stabilizing nipple **230** is preferably rounded and sized to present a reduced ring area for contact with the egg. More specifically, the diameter of the circular lower edge **414** is preferably less than 1/2 inch, and a 3/8 inch outer diameter is most preferred. It has been found that this smaller diameter contact surface area results in a proper injection location within the egg irrespective of the size and tilt orientation of the egg in the incubating tray 168. The central opening **416** of the nipple **230** through which the needle **208** extends during egg penetration and injecting also has a small internal seal ring **418** which seals against the outer surface of the needle **208.** When the needle **208** is lifted to its retracted position, with the needle tip **368** in opening **416,** the internal seal ring **418** serves to wipe the outer wall surface of the needle **308.** Hence, the internal seal ring **418** cleans the needle **208** during its upstroke both after egg injection and after injector sanitization. This wiping of the needle **208** after the injector sanitization causes the sanitizing fluid to be wiped clean from the needles and to drop into the collecting pan **310** before initiation of the next injecting cycle, thus eliminating the dripping of sanitizing solution onto the next group of eggs to be injected. The stabilizing nipple **230** is made from any suitable elastomeric material, and silicone rubber is preferred in view of its inert properties.

The needle guide sleeve **394** has an axial bore **420** for receiving the needle **208.** The male fitting **362** at the upper end **360** of the needle **208** is received in a complementary fitting clip **422** at the upper end of the needle guide sleeve **394** so that the needle **208,** sleeve **394** and piston **388** all move together. It is understood that a threaded or other type fitting could be used to accomplish this purpose. The axial bore **420** in the needle guide sleeve **394** is minimally larger than the outside diameter of the needle **208,** thereby providing lateral support to the needle during penetration of the egg shell. This diameter differential also allows removal and replacement of the needle **208** from the top of the injector **204.**

The needle depth adjuster (NDA) and vaccine conservation valve (VCV), in accordance with the present invention, are designed to be used in conjunction with existing and yet to be produced *in ovo* injectors that operate with the freedom to move vertically and angularly to adjust to the top of the egg (FIGS. 1, 2, and 4). All existing *in ovo* equipment has this ability.

In an embodiment the present invention is illustrated by FIG. 2A, wherein a plurality of injectors **204** are held in holes on an injector support plate **200,** and wherein the injectors are located in a vertical position, perpendicular to the plate **200.** The arrangement of the injectors **204** about the injector support plate **200** matches the arrangement about the egg incubator tray **600** of the eggs **100** to be inoculated. The injectors are each operably connected to needle depth adjusters (NDA) **110,** vaccine conservation valves (VCV) **700,** each according to the present invention, or both NDA and VCV.

In a particular embodiment, the present invention provides an automated *in ovo* injection machine for conditionally injecting fluid substances into eggs, only when said eggs are present beneath a conditional *in ovo* injector, said machine comprising:
a support frame having a movable supporting structure mounted thereon, said movable supporting structure retaining an egg tray thereon and said movable supporting structure and said egg tray moving together laterally in a generally horizontal direction when said egg tray is retained on said support structure;
a plurality of fluid substance manifolds, each comprising: a fluid substance intake opening, to receive fluid substances from a reservoir; an opening to receive a common pneumatic signal; a plurality of openings to receive an individual pneumatic actuation signal; a plurality of spool valves; and a plurality of fluid substance output ports;
an injector assembly mounted on or coupled to said support frame and having a plurality of conditional *in ovo* injectors arranged in a generally rectangular, longitudinally extending matrix above said egg tray; said plurality of conditional *in ovo* injectors being movable in a substantially vertical direction and having needles to inject eggs in said egg tray retained on and positioned by said supporting structure; said supporting structure being movable between an injection position in which eggs in an egg tray retained on said supporting structure are positioned directly underneath and in vertical alignment with said injectors and a loading position in which said supporting structure and said egg tray retained thereon are positioned laterally away from said injectors, said supporting structure being movable back and forth between said injection and loading positions;
wherein each injector is equipped with a means for activating a pneumatic logic circuit, wherein when the injectors are moved down onto the eggs, or the eggs are moved up onto the injectors, the eggs physically contact and displace the injectors; and
wherein this displacement activates the pneumatic logic circuit such that, in a subsequent injection step, each conditional injector will only deploy its injection needle and inject the vaccine or the other fluid substance when an egg is present beneath it; and
wherein when an egg is not present, the injector's needle is not deployed and no liquid is administered to the egg.

In an embodiment, each conditional injector may comprise at least one magnet, wherein vertical movement from an initial position to an injection position, caused by the physical contact and movement of the injector by an egg, causes a magnetic switch to be turned on or off, depending upon the desired logic, which activates the pneumatic logic circuit such that when the egg is present, and the injector is in the injection position, the needle will be deployed, and the vaccine or other substance will be administered to the egg.

In another embodiment, the automated *in ovo* injection machine further comprises a fluid conduit, which is operably connected to an injector valve, one input of an "AND" valve, and the injector's needle; and wherein when an egg displaces the conditional *in ovo* injector, the switch is activated, which causes the injector valve to be actuated, which allows a pneumatic pressure to be applied to the fluid conduit, which causes the injector's needle to be deployed downward, into its corresponding egg, and also applies pressure to one of the two inputs of the "AND" valve.

In an embodiment, the automated *in ovo* injection machine further comprises a third valve, a vaccine directional valve, a vaccine chamber, and a vaccine pump comprising a spring; wherein after the needle is deployed into the down position and the first input of the "AND" valve is pressurized, the third valve is activated, causing pressure to be applied to the second input of the "AND" gate, which causes a vaccine directional valve to move, which places the vaccine chamber in fluid communication with the conditional injector's needle.

In yet another embodiment, the automated *in ovo* injection machine further comprises a vaccine pump actuator and an exhaust valve; wherein after the vaccine chamber is placed in fluid communication with the needle, the vaccine pump actuator is actuated to power the vaccine pump, which then delivers vaccine to the needle and into the egg, after which the third valve is deactivated, to shift the vaccine directional valve, and the exhaust valve relieves pressure from the "AND" valve. In an embodiment, after the pressure is relieved from the "AND" valve, the vaccine directional valve is shifted to isolate the vaccine pump from the needle and also connect the pump to a vaccine bag; and wherein pressure is then applied to move each needle into its up position, the pump actuator is deactivated, to remove power from vaccine pump, the exhaust valve relieves pressure from pump, and the vaccine pump pulls fluid from bag by spring action.

In an embodiment, the presence of an egg beneath a conditional injector causes the conditional injector to move from an initial position to an injection position, thereby turning on the reed switch.

In an embodiment, the automated *in ovo* injection machine may further comprise one or more pusher assemblies, wherein the pusher assemblies reduce the undesirable reorientation of the eggs (i.e. reorientation away from the preferred substantially vertical alignment, relative to the conditional injectors).

In an embodiment, the conditional injectors may comprise a needle depth regulation means, including a needle depth adjustor, in accordance with this disclosure.

In an embodiment, the automated *in ovo* injection machine may comprise one or more egg flat retention means. The machine may also comprise QC lights, for indicating which injectors have been displaced by an egg.

In another embodiment, the machine may comprise a four-post lifter, which maintains a substantially parallel alignment between the flat of eggs and the array of conditional injectors, such that the injector heads are substantially vertically aligned with respect to the longitudinal axis of the eggs.

In another embodiment, the automated *in ovo* injection machine comprises an injection section, which includes a moveable injector assembly in which said injectors are individually moveable within said injector assembly in a vertical direction, and further includes gripping elements in said injector assembly which inflate to grip said injectors when properly positioned on said eggs for injection.

In another aspect, the invention provides a method of conditionally injecting eggs with a fluid comprising the step of injecting the eggs using the automated conditional *in ovo* injection machine as herein described.

In an embodiment, the method may comprise the steps of: manually moving the supporting structure horizontally in a first direction to the loading position; arranging at least one tray of eggs onto the supporting structure in said loading position; manually moving the supporting structure horizontally in a second direction to the injection position, said second direction being opposite said first direction; activating the automated injection assembly to inject the eggs on the egg tray with a fluid in said injection position; and manually moving the supporting structure horizontally back to the loading position where the egg tray can be removed and a new egg tray loaded for a next automated injection sequence.

Another aspect of the invention relates to the individual components that contribute to the machine's conditional substance delivery functionality.

In an embodiment, the invention provides a fluid substance manifold, which may comprise: a fluid substance intake opening, to receive fluid substances from a reservoir; an opening to receive a common pneumatic signal; a plurality of openings to receive an individual pneumatic actuation signal; a plurality of spool valves; and a plurality of fluid substance output ports.

In an embodiment, the invention provides a pneumatic circuit, which imparts on the *in ovo* injection machine its conditional substance delivery functionality. The circuit may include the following features, elements, and/or steps, as set forth in FIG. 21: injection machine is idle, egg loaded under injectors (**1**); egg displaces Injector from switch (**2**); switch actuates Injector Valve (**3**); Pressure for needles down is applied. Injector pushes needle down. One of the input on AND valve gets pressure (**4**); Y46 is actuated to pilot vaccine directional valve (**5**); AND logic valve now open; allows pilot for vaccine directional valve (**6**); Vaccine directional valve shifts to connect vaccine chamber with needle (**7**); Y31 is actuated to power vaccine pump (**8**); Vaccine pump delivers vaccine to needle (**9**); Y46 is deactivated to shift Vaccine directional valve (**10**); Quick exhaust valve relieves pressure from logic AND valve (**11**); Vaccine directional valve shifts to isolate vaccine pump from needle. Connects pump to the vaccine bag (**12**); Pressure for needles UP is applied. Injector pulls needle Up (**13**); Y31 is deactivated to remove power from vaccine pump (**14**); Quick exhaust valve relieves pressure from Pump. Vaccine Pump pulls fluid from bag by spring action (**15**); the Egg moves away from injector. Switch open circuit to deactivate injector valve (**16**), completing the cycle.

In an embodiment, the invention provides a needle depth adjuster (NDA) for use with the *in ovo* injection device of claim 1 wherein said NDA restricts the depth of needle penetration such that relatively smaller eggs are penetrated less deeply than are relatively larger eggs, and wherein the reduced penetration of the relatively smaller eggs improves the hatchability by reducing the percent of embryos that are damaged by injection. The NDA may further comprise a bottom portion which conforms to, and minimally exceeds the diameter of, the circular body of an *in ovo* injector and a top portion which further comprises an opening through which a needle guide sleeve of said *in ovo* injector may inserted and wherein a retaining means is attached to the needle guide sleeve such that the retaining means allows the NDA to limit the range of motion of an injection needles.

In an embodiment, the NDA further comprises a first portion and a second portion, wherein said first and second portions are inserted into a cylinder or shaft of an *in ovo* injector such that the range of motion of an injector piston is limited, thereby limiting the depth of needle penetration, by the combined action of the first and second portions of the NDA making physical contact with both the injector piston and with a top surface of an injector support plate. The NDA may, when operably connected to the conditional *in ovo* injector, not limit the range of motion of the needle when a sufficiently large egg is present beneath the injector, but may maximally limit the range of motion of the needle when a sufficiently small egg is present beneath the injector.

In an embodiment, the NDA may limit the needle penetration depth by limiting the range of motion of the needle to a greater extent when a relatively smaller egg is present beneath the injector as compared to when a relatively larger egg is present beneath the injector.

Another embodiment of the present invention provides for opposing vertical movements of the injectors **204** (upward) and the injection needles **208** (downward), wherein the movement of the injection needles **208** is restricted by the needle depth adjuster (NDA) to provide for a relatively uniform percent egg penetration depth (PEPD), and wherein the actual needle penetration depth (NPD) is adjusted such that smaller eggs are penetrated by the injection needle less deeply than are larger eggs. In another such embodiment, the NPD is adjusted to target specific regions of embryonated eggs, for example, in regions of the egg that are most advantageous for delivery of vaccines or other substances.

In an embodiment according to the present invention, a means for moving said plate **200** vertically and in parallel with respect to the egg tray **600** to one of at least two fixed positions is operabably connected to said plate **200.** The first position is defined as an upper or "loading ready" position, which position allows for placement of an egg tray **600** containing eggs **100** beneath the injectors **204** which are held in the injector support plate **200.** The second position is defined as a fixed lower or "injection ready" position, which position allows the injectors **204** to make contact with the surface of their corresponding eggs **100.** While the plate **200** is moving from the fixed upper position to the fixed lower position, injectors **204** will make contact first with relatively larger eggs and then make contact with relatively smaller eggs. The larger the egg the less distance the injector plate **200** must move before the corresponding injector **204** makes contact with said egg. The smaller the egg the greater the distance the injector plate **200** must move before the corresponding injector **204** makes contact with said egg.

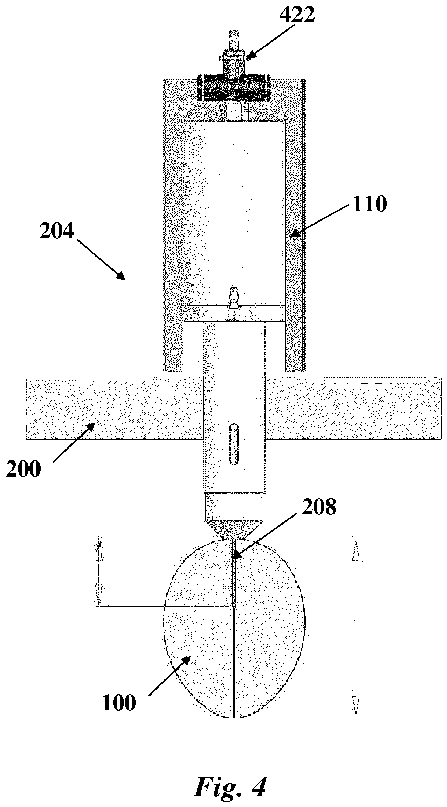

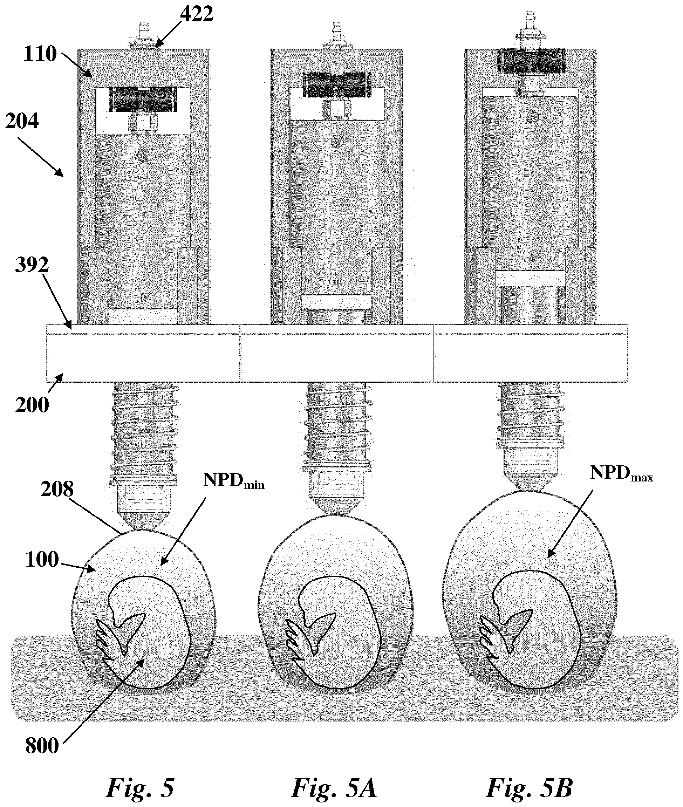

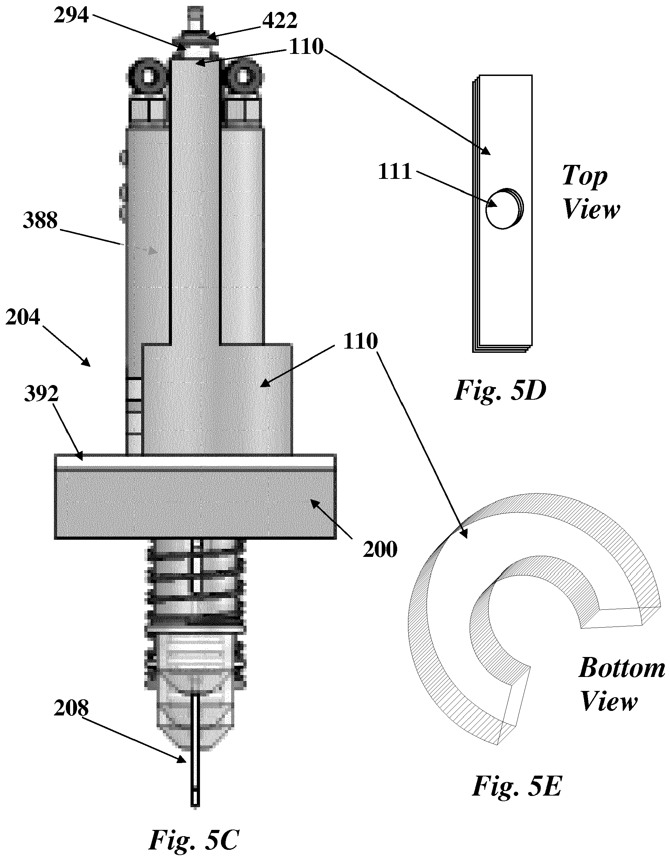

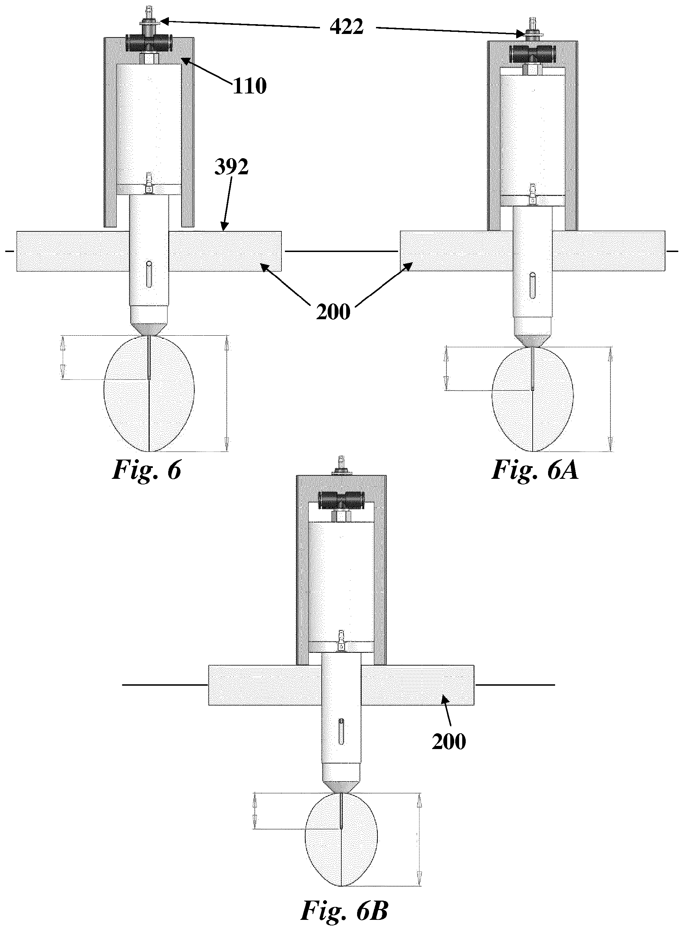

In an embodiment, each injector **204** is equipped with a needle penetration depth adjuster (NDA) **110** according to the present invention and as shown, for example, in FIGs. 4 and 5C. The needle penetration depth adjuster **110** is operably connected to the injector **204** such that the percent penetration (i.e. the needle penetration depth divided by the egg's long axis) of the needle **208** into the eggs **100** remains similar over a wide range of egg sizes, as is illustrated by FIGs. 5-5B and 6-6B. When the plate **200** moves from the upper fixed position to the lower fixed position, the eggs are contacted by the injectors at different movement distances depending upon the size and orientation of the eggs. The depth adjusters **110** are operably connected to the injectors such that the depth adjusters make contact with the surface **392** of the injector support plate **200** after the plate **200** moves a specified distance. Said specified distance may be changed depending upon user preferences, with said changes resulting in a net increase or net decrease in the average percent penetration of the eggs. Once the NDA **110** contacts the plate surface **392,** the needle penetration depth will begin and continue to be restricted until the plate **200** reaches the lower fixed position. Eggs that are contacted by injectors **204** at the same time as or before the needle depth adjuster **110** contacts the plate surface **392** will be subsequently subjected to a maximum needle penetration depth (NPDₘₐₓ), as illustrated for example by FIG. 5B. Eggs that are contacted by injectors **204** after the needle depth adjuster **110** contacts the plate surface **392** will be subsequently subjected to an NPD that is less than the NPDₘₐₓ and as low as a minimum needle penetration depth (NPDₘᵢₙ), as illustrated for example by FIG. 5A. The plate **200** is equipped with a means to secure the position of each individual injector once all the injectors **204** have made contact with their corresponding eggs and the plate **200** has reached the fixed lower position. After all the injectors are so secured the process of injection of the eggs begins.

As defined herein, an egg that is "sufficiently large", in the context of needle depth adjustment, is one that is large enough such that the needle penetration depth is not adjusted or restricted by the NDA. Also as defined herein, an egg that is "sufficiently small", in the context of needle depth adjustment, is one that is small enough such that the needle penetration depth is maximally adjusted or restricted by the NDA. Therefore, the term "sufficiently large egg" corresponds with NPDₘₐₓ and the term "sufficiently small egg" corresponds with NPDₘᵢₙ. For eggs sizes that fall between "sufficiently large" and "sufficiently small", the term "relatively larger eggs" will mean eggs that are subject to reduced needle depth adjustment as compared to "relatively smaller eggs".

In an embodiment, the NDA may appear, for example, essentially as illustrated in FIGs. 5-5C. As exemplified in FIGs. 5C-D, the NDA **110** may have an opening **111** which permits the injector's needle guide sleeve **394** to penetrate through a top portion of said NDA **110.** The opening **111** has a diameter that is minimally larger than that of the needle guide sleeve **294.** This diameter differential also allows convenient removal and replacement of the NDA as required, thereby obviating the need to replace the entire injector should the NDA become damaged.

Once the NDA is fitted about the injector **204** via insertion of the needle guide sleeve **294** through the opening **111,** the clip **422** may be attached to the needle guide sleeve **394,** thereby securing the NDA **110** and allowing the NDA to limit or restrict the range of motion of the needle, which motion is governed by the injector piston **388,** thereby adjusting the needle penetration depth (NPD). Thusly attached to the injector **204,** the NDA **110** may be situated such that it can make physical contact with clip **422** at specific places throughout the injector's complete range of motion. The NDA may be made of any suitable hard plastic material known to those of ordinary skill in this art.

In an embodiment of the present invention, the NDA **110** may be shaped to conform to the circular contour of the injector **204** such that the NDA **110** partially circumscribes the injector **204** as is illustrated in FIG. 5C-E. The NDA may also be placed inside the periphery of the injector **204** as is illustrated in FIGs. 6-6B. In such embodiments, a spring or other suitable mechanical means may be used to return the NDA to its starting position, to avoid unwanted pneumatic effects that may develop when using an internally configured NDA.

In an embodiment, an *in ovo* injection device according to the present invention may include the structural elements essentially as shown in FIGs. 5, 6, and 12.

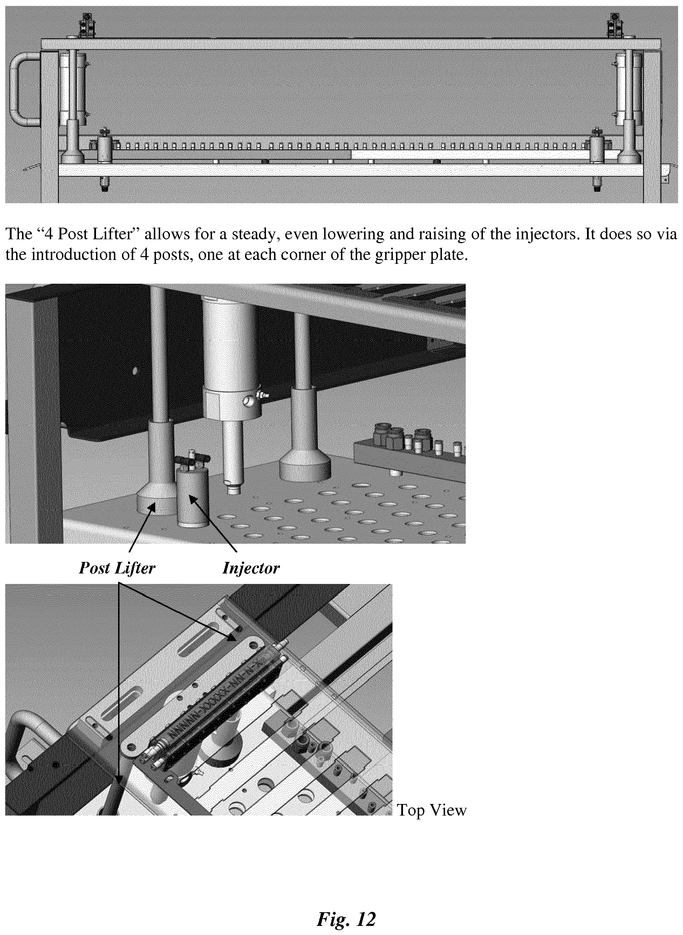

In another embodiment of the present invention, each injector **204** is equipped with a vaccine conservation valve (VCV) essentially as illustrated, for example, in FIG. **12****.**
In another embodiment the present invention may comprise an *in ovo* injection device which further comprises, or is in fluid communication with, a valve.

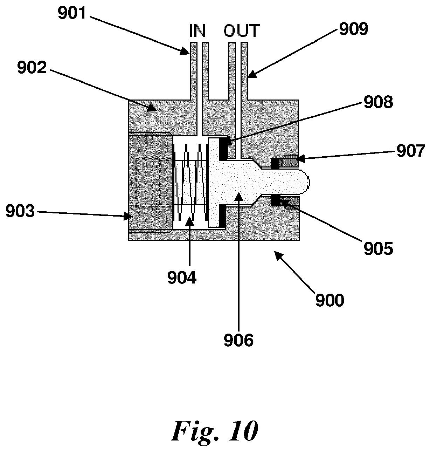

In one embodiment, the valve may have similar components as those depicted in FIG. 10.

In an embodiment of the present invention the *in ovo* injection is carried out as follows: the injection needle **208** is extended by the injector **204,** and where an egg **100** is present in the incubator tray **600,** and wherein the vaccine conservation valve (VCV) **700** has been actuated due to the presence of said egg, vaccine or other substances are delivered into said egg.

As currently disclosed herein, the NDA and VCV are particularly well-suited to function with *in ovo* injection devices as set forth by US 7,360,500 to Correa. Thus one preferred embodiment is such an *in ovo* injector operably connected to both an NDA and a VCV according to the present invention.

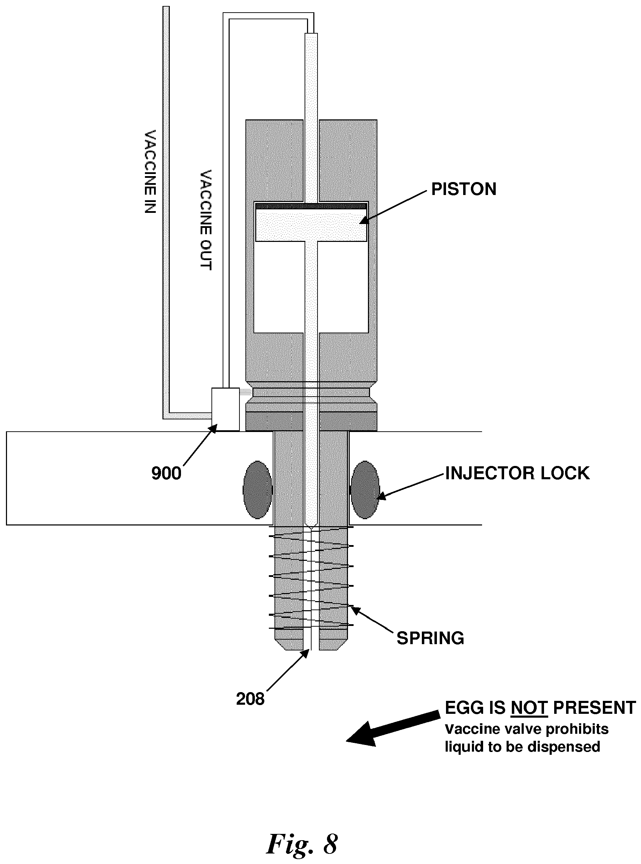

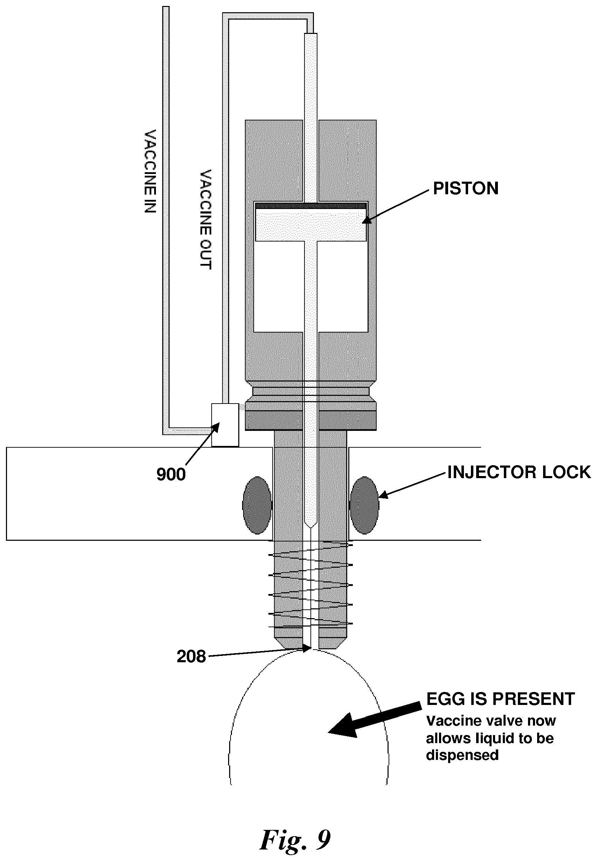

In an embodiment, the VCV **900** allows for the conditional dispensing of liquids dependent upon the presence or absence of an egg in a proper proximity to an egg injector **204,** essentially as depicted in FIGs. 8 (no egg present), 9 (egg present), and 10 (close-up diagram of a VCV according to the present invention). In such an embodiment, the proper proximity is determined by direct contact of an egg with said egg injector **204.** Also in such an embodiment, if the head of the injector **204** contacts an egg, the head of said injector moves up when the injector plate **200** moves down. In such an embodiment, the upward movement of the injector **204** activates a valve piston **906** when the egg is present (FIG. 9), and does not activate the valve piston **906** when the egg is not present (FIG. 8).

In an embodiment, the instant invention may include a VCV **900** having components essentially as illustrated in FIG. 10. In such an embodiment, the components may include an "in connector" **901,** a valve body **902,** a main screw **903,** a spring **904,** a head o-ring **905,** a valve piston **906,** a head screw **907,** a substance o-ring **908,** and an "out connector" **909.** Other functional equivalents for each of the vaccine conservation valve (VCV) components are encompassed by the instant invention.

In an embodiment, the present invention includes a method to conditionally dispense one or several substances into an egg or eggs, only when said egg or eggs is present on the incubator tray **600.**

In an embodiment, the method includes the following steps: positioning a valve(s) in fluid communication with the substance delivery conduits of an egg injector(s), placing the egg injector(s) head up on an injector table, pointing an injector head(s) downwards, placing eggs on incubator trays, said trays having spaces where there are eggs and spaces where there are no eggs due to previous egg removal, moving the trays such that the centers of said spaces are beneath the centers of said egg injector(s), moving the table down, and injecting said eggs only where eggs are present. In such an embodiment, if there is no egg present, a valve piston is not activated and the liquid or vaccine is not injected. Also in such an embodiment, if there is an egg present, the valve piston is activated and the liquid or vaccine is injected into the egg. After the injection, the injector table goes up, concurrent with a spring pushing the valve piston back, thereby stopping the flow of the liquid or vaccine, and placing the egg injector into a "resting" position.

Use of the *in ovo* injection delivery device VCV and NDV and methods of the invention are preferred over currently used injection methods and apparatus to reduce hatchery costs. One advantage of the vaccine- and other substance-saving methods of the invention is that the valve can be adapted for use with existing egg injectors. Another advantage is that the needle depth adjuster can also be adapted for use with existing egg injectors. According to the present invention, both valves, needle depth adjusters, and egg injectors will now be able to be replaced independently of one another, significantly reducing the costs associated with *in ovo* injection equipment maintenance.

Now that the present invention has been fully disclosed herein, it will be appreciated by those of ordinary skill in the art that the needle depth adjuster (NDA) and the vaccine conservation valve (VCV) can be adapted, with routine and modest experimentation, to function with existing and future *in ovo* injection devices. It will be further appreciated that the NPDₘₐₓ and NPDₘᵢₙ can be adjusted according to user needs.

The methods and apparatus of the invention are particularly useful for delivering treatment substances such as, but not limited to, Infectious Bursal Disease vaccine, Newcastle's disease vaccine and Marek's disease vaccine. Marek's disease vaccine is preferably administered into the region defined by the amnion;

The term "adjuvant" refers to a compound or mixture that enhances the immune response to an antigen. An adjuvant can serve as a tissue depot that slowly releases the antigen and also as a lymphoid system activator that non-specifically enhances the immune response (Hood et al., Immunology, Second Ed., 1984, Benjamin/Cummings: Menlo Park, Calif., p. 384). Often, a primary challenge with an antigen alone, in the absence of an adjuvant, will fail to elicit a humoral or cellular immune response. Adjuvants include, but are not limited to, complete Freund's adjuvant, incomplete Freund's adjuvant, saponin, mineral gels such as aluminum hydroxide, surface active substances such as lysolecithin, pluronic polyols, polyanions, peptides, oil or hydrocarbon emulsions, keyhole limpet hemocyanins, dinitrophenol, and potentially useful human adjuvants such as BCG (bacille Calmette-Guerin) and Corynebacterium parvum).

The present invention encompasses a method for enhancing an avian immune response which comprises administering to the avian egg an effective amount of the vaccine for protecting an avian against a disease organism such as a virus which comprises an effective immunizing amount of a vector comprising 1) one or more isolated nucleic acids encoding a polypeptide, wherein said nucleic acid is under the control of a promoter; and 2) a suitable carrier and/or an adjuvant.

The present invention also provides a method of immunizing an avian comprising administrating to the avian egg an effective amount of the vaccine. Such pathogens or diseases are known to those skilled in the art and include but are not limited to: Infectious Bursal Disease Virus, Newcastle Disease Virus, and/or *Mycoplasma gallisepticum.* The vaccine may be administered in conjunction with live or attenuated vaccines that are known to those skilled in the art. As contemplated herein the present vaccine or vector may be administered in combination with other vaccines that are known to those skilled in the art.

For purposes of this invention, an "effective immunizing amount" of the vaccine of the present invention is within the range of 1 µg to 100 mg. In another embodiment the immunizing amount is of 1 ng to 100 ng. In a preferred embodiment the immunizing amount is 100 µg.

As disclosed in U.S. Pat. Ser. No. 6,464,984 to Audonnet et al., which is incorporated herein by reference in its entirety, the vaccine may comprise more than one valency and comprise at least one plasmid, integrating so as to express in vivo in the host cells a gene with one or more avian pathogen valencies, these valencies being selected from the group consisting of Marek's disease virus (MDV), Newcastle's disease virus (NDV), infectious bursal disease virus (IBDV), infectious bronchitis virus (IBV), infectious anemia virus (CAV), infectious laryngotracheitis virus (ILTV), encephalomyelitis virus (AEV or avian leukosis virus ALV), pneumovirosis virus, and avian plague virus, the plasmids comprising, for each valency, one or more of the genes selected from the group consisting of, but not limited to, gB and gD for the Marek's disease virus, HN and F for the Newcastle disease virus, VP2 for the infectious bursal disease virus, S, M and N for the infectious bronchitis virus, C+NSI for the infectious anemia virus, gB and gD for the infectious laryngotracheitis virus, env and gag/pro for the encephalomyelitis virus, F and G for the pneumovirosis virus and HA, N and NP for the avian plague virus.

Valency in the present invention is understood to mean at least one antigen providing protection against the organism, such as a virus, for the pathogen considered, it being possible for the valency to contain, as subvalency, one or more natural or modified genes from one or more strains of the pathogen considered.

Advantageously, the vaccine formula according to the invention may comprise, but is not intended to be limited to, more than one valency including, for example, at least three valencies chosen from, but not limited to, Marek, infectious bursal, infectious anemia and Newcastle. The infectious bronchitis valency can also preferably be added thereto.

On this basis of 3, 4 or 5 valencies, it will be possible to add one or more of the avian plague, laryngotracheitis, pneumovirosis and encephalomyelitis valencies.

As regards the Marek valency, two genes may be used encoding gB and gD, in different plasmids or in one and the same plasmid. For the Newcastle valency, the two HN and F chains, integrated into two different plasmids or into one and the same plasmid, are preferably used. For the infectious bronchitis valency, the use of the S gene is possible. The S and M can be associated in a single plasmid or in different plasmids. For the infectious anemia valency, the two C and NS1 genes are preferably associated in the same plasmid. For the infectious laryngotracheitis valency, the use of the gB gene alone is preferred. Optionally, but less preferably, the two gB and gD genes can be associated in different plasmids or in one and the same plasmid.

For the avian plague valency, the use of the HA gene is advantageous although it is possible to use the associations HA and NP or HA and N in different plasmids or in one and the same plasmid. The HA sequences from more than one influenza virus strain, in particular from the different strains found in the field, may be associated in the same vaccine. On the other hand, NP provides cross-protection and the sequence from a single virus strain will therefore be satisfactory. For the encephalomyelitis valency, the use of env is preferred.

The vaccine formula according to the invention can be presented in a dose volume of between 0.1 and 1 ml and in particular between 0.3 and 0.5 ml.

The dose will be generally between 10 ng and 1 mg, preferably between 100 ng and 800 µg and preferably between 0.1 µg and 50 µg per plasmid type.

The combination of the different vaccine valencies may be preferably achieved by mixing the polynucleotide plasmids expressing the antigen(s) of each valency, but it is also possible to envisage causing antigens of several valencies to be expressed by the same plasmid.

The methods of the invention, therefore, encompass the injection of a monovalent vaccine formulae comprising one or more plasmids encoding one or more genes from one of the viruses above, the genes being those described above. Besides their monovalent character, these formulae may possess the characteristics stated above as regards the choice of the genes, their combinations, the composition of the plasmids, the dose volumes, the doses and the like.

The monovalent vaccine formulae may also be used (i) for the preparation of a polyvalent vaccine formula as described above, (ii) individually against the actual pathology, (iii) associated with a vaccine of another type (live or inactivated whole, recombinant, subunit) against another pathology, or (iv) as booster for a vaccine as described below.

Another exemplary treatment substance is a biologically active substance such as a vaccine, antibiotic, hormone, probiological culture (e.g., a competitive exclusion media), and the other is a marker such as a dye. The marker can serve as a positive control to confirm injection, for example in the case of eggs subsequently found to be nonviable.

The documents cited or referenced herein ("herein cited documents"), and all documents cited or referenced in herein cited documents, together with any manufacturer's instructions, descriptions, product specifications, and product sheets for any products mentioned herein or in any document incorporated by reference herein, are hereby incorporated herein by reference, and may be employed in the practice of the invention.

It will be apparent that the precise details of the articles of manufacture and the methods described may be varied or modified without departing from the spirit of the described disclosure. We claim all such modifications and variations that fall within the scope and spirit of the numbered paragraphs below.
The invention is described in the following numbered paragraphs:
1. An automated *in ovo* injection machine for conditionally injecting fluid substances into eggs, only when said eggs are present beneath a conditional *in ovo* injector, said machine comprising:
   a support frame having a movable supporting structure mounted thereon, said movable supporting structure retaining an egg tray thereon and said movable supporting structure and said egg tray moving together laterally in a generally horizontal direction when said egg tray is retained on said support structure;
   a plurality of fluid substance manifolds, each comprising: a fluid substance intake opening, to receive fluid substances from a reservoir; an opening to receive a common pneumatic signal; a plurality of openings to receive an individual pneumatic actuation signal; a plurality of spool valves; and a plurality of fluid substance output ports;
   an injector assembly mounted on or coupled to said support frame and having a plurality of conditional *in ovo* injectors arranged in a generally rectangular, longitudinally extending matrix above said egg tray;
   said plurality of conditional *in ovo* injectors being movable in a substantially vertical direction and having needles to inject eggs in said egg tray retained on and positioned by said supporting structure;
   said supporting structure being movable between an injection position in which eggs in an egg tray retained on said supporting structure are positioned directly underneath and in vertical alignment with said injectors and a loading position in which said supporting structure and said egg tray retained thereon are positioned laterally away from said injectors, said supporting structure being movable back and forth between said injection and loading positions;
   wherein each injector is equipped with a means for activating a pneumatic logic circuit, wherein when the injectors are moved down onto the eggs, or the eggs are moved up onto the injectors, the eggs physically contact and displace the injectors; and
   wherein this displacement activates the pneumatic logic circuit such that, in a subsequent injection step, each conditional injector will only deploy its injection needle and inject the vaccine or the other fluid substance when an egg is present beneath it; and
   wherein when an egg is not present, the injector's needle is not deployed and no liquid is administered to the egg.
2. The automated *in ovo* injection machine of paragraph 1, wherein each conditional injector comprises at least one magnet, wherein vertical movement from an initial position to an injection position, caused by the physical contact and movement of the injector by an egg, causes a magnetic switch to be turned on or off, depending upon the desired logic, which activates the pneumatic logic circuit such that when the egg is present, and the injector is in the injection position, the needle will be deployed, and the vaccine or other substance will be administered to the egg.
3. The automated *in ovo* injection machine of paragraph 1, further comprising a fluid conduit, which is operably connected to an injector valve, one input of an "AND" valve, and the injector's needle; and
   wherein when an egg displaces the conditional *in ovo* injector, the switch is activated, which causes the injector valve to be actuated, which allows a pneumatic pressure to be applied to the fluid conduit, which causes the injector's needle to be deployed downward, into its corresponding egg, and also applies pressure to one of the two inputs of the "AND" valve.
4. The automated *in ovo* injection machine of paragraph 3, further comprising a third valve, a vaccine directional valve, a vaccine chamber, and a vaccine pump comprising a spring;
   wherein after the needle is deployed into the down position and the first input of the "AND" valve is pressurized, the third valve is activated, causing pressure to be applied to the second input of the "AND" gate, which causes a vaccine directional valve to move, which places the vaccine chamber in fluid communication with the conditional injector's needle.
5. The automated *in ovo* injection machine of paragraph 4, further comprising a vaccine pump actuator and an exhaust valve;
   wherein after the vaccine chamber is placed in fluid communication with the needle, the vaccine pump actuator is actuated to power the vaccine pump, which then delivers vaccine to the needle and into the egg, after which the third valve is deactivated, to shift the vaccine directional valve, and the exhaust valve relieves pressure from the "AND" valve.
6. The automated *in ovo* injection machine of paragraph 5, wherein after the pressure is relieved from the "AND" valve, the vaccine directional valve is shifted to isolate the vaccine pump from the needle and also connect the pump to a vaccine bag; and
   wherein pressure is then applied to move each needle into its up position, the pump actuator is deactivated, to remove power from vaccine pump, the exhaust valve relieves pressure from pump, and the vaccine pump pulls fluid from bag by spring action.
7. The automated *in ovo* injection machine of paragraph 2, wherein the presence of an egg causes the conditional injector to move from an initial position to an injection position, thereby turning on the reed switch.
8. The automated *in ovo* injection machine of paragraph 1, further comprising a pusher assembly.
9. The automated *in ovo* injection machine of any one of the proceeding paragraphs, wherein the conditional injectors comprise a needle depth regulation means.
10. The automated *in ovo* injection machine of any one of the proceeding paragraphs, wherein the machine comprises an egg flat retention means.
11. The automated *in ovo* injection machine of any one of the proceeding paragraphs, wherein the machine comprises QC lights, for indicating which injectors have been displaced by an egg.
12. The automated *in ovo* injection machine of any one of the proceeding paragraphs, wherein the machine comprises a four-post lifter, which maintains a substantially parallel alignment between the flat of eggs and the array of conditional injectors, such that the injector heads are substantially vertically aligned with respect to the longitudinal axis of the eggs.
13. The automated *in ovo* injection machine of any one of the proceeding paragraphs, wherein the injection section includes a moveable injector assembly in which said injectors are individually moveable within said injector assembly in a vertical direction, and further includes gripping elements in said injector assembly which inflate to grip said injectors when properly positioned on said eggs for injection.
14. A method of injecting eggs with a fluid comprising the step of injecting the eggs with the automated conditional *in ovo* injection machine of any one of the preceding paragraphs.
15. The method of paragraph 14, comprising the steps of:
   manually moving the supporting structure horizontally in a first direction to the loading position;
   arranging at least one tray of eggs onto the supporting structure in said loading position;
   manually moving the supporting structure horizontally in a second direction to the injection position, said second direction being opposite said first direction;
   activating the automated injection assembly to inject the eggs on the egg tray with a fluid in said injection position; and
   manually moving the supporting structure horizontally back to the loading position where the egg tray can be removed and a new egg tray loaded for a next automated injection sequence.
16. A needle depth adjuster (NDA) for use with the *in ovo* injection device of paragraph 1 wherein said NDA restricts the depth of needle penetration such that relatively smaller eggs are penetrated less deeply than are relatively larger eggs, and wherein the reduced penetration of the relatively smaller eggs improves the hatchability by reducing the percent of embryos that are damaged by injection.
17. The NDA of paragraph 16 further comprising a bottom portion which conforms to, and minimally exceeds the diameter of, the circular body of an *in ovo* injector and a top portion which further comprises an opening through which a needle guide sleeve of said *in ovo* injector may inserted and wherein a retaining means is attached to the needle guide sleeve such that the retaining means allows the NDA to limit the range of motion of an injection needles.
18. The NDA of paragraph 16, further comprising a first portion and a second portion, wherein said first and second portions are inserted into a cylinder or shaft of an *in ovo* injector such that the range of motion of an injector piston is limited, thereby limiting the depth of needle penetration, by the combined action of the first and second portions of the NDA making physical contact with both the injector piston and with a top surface of an injector support plate.
19. The NDA of paragraph 16, which when operably connected to the *in ovo* injector does not limit the range of motion of the needle when a sufficiently large egg is present beneath the injector, but does maximally limit the range of motion of the needle when a sufficiently small egg is present beneath the injector.
20. The NDA of paragraph 19, which limits the needle penetration depth by limiting the range of motion of the needle to a greater extent when a relatively smaller egg is present beneath the injector as compared to when a relatively larger egg is present beneath the injector.
The invention is also described in the following numbered paragraphs:
1. A method of injecting eggs with a fluid comprising the step of injecting the eggs with an automated conditional *in ovo* injection machine, said machine comprising:
   a support frame having a movable supporting structure mounted thereon, said movable supporting structure retaining an egg tray thereon and said movable supporting structure and said egg tray moving together laterally in a generally horizontal direction when said egg tray is retained on said support structure;
   a plurality of fluid substance manifolds, each comprising: a fluid substance intake opening, to receive fluid substances from a reservoir; an opening to receive a common pneumatic signal; a plurality of openings to receive an individual pneumatic actuation signal; a plurality of spool valves; and a plurality of fluid substance output ports;
   an injector assembly mounted on or coupled to said support frame and having a plurality of conditional *in ovo* injectors arranged in a generally rectangular, longitudinally extending matrix above said egg tray;
   said plurality of conditional *in ovo* injectors being movable in a substantially vertical direction and having needles to inject eggs in said egg tray retained on and positioned by said supporting structure;
   said supporting structure being movable between an injection position in which eggs in an egg tray retained on said supporting structure are positioned directly underneath and in vertical alignment with said injectors and a loading position in which said supporting structure and said egg tray retained thereon are positioned laterally away from said injectors, said supporting structure being movable back and forth between said injection and loading positions;
   wherein each injector is equipped with a means for activating a pneumatic logic circuit, wherein when the injectors are moved down onto the eggs, or the eggs are moved up onto the injectors, the eggs physically contact and displace the injectors; and
   wherein when an egg is not present, the injector's needle is not deployed and no liquid is administered to the egg.
2. The method of paragraph 1 wherein said *in ovo* injection machine comprises a fluid conduit, which is operably connected to an injector valve, one input of an "AND" valve, and the injector's needle.
3. The method of paragraph 1 or paragraph 2 wherein each conditional injector comprises at least one magnet, wherein when an egg displaces the conditional *in ovo* injector, a magnetic switch is caused to be turned on or off, depending upon the desired logic, which activates the pneumatic logic circuit.
4. The method of paragraph 3 wherein activation of the pneumatic logic circuit comprises actuation of the injector valve, which allows a pneumatic pressure to be applied to the fluid conduit, which causes the injector's needle to be deployed downward, into its corresponding egg, and also applies pressure to one of the two inputs of the "AND" valve.
5. The method of any one of paragraphs 1 to 4 wherein when an egg is present, and the injector is in the injection position, the needle will be deployed, and the vaccine or other substance will be administered to the egg.
6. The method of any one of paragraphs 1 to 5 comprising the steps of:
   manually moving the supporting structure horizontally in a first direction to the loading position;
   arranging at least one tray of eggs onto the supporting structure in said loading position;
   manually moving the supporting structure horizontally in a second direction to the injection position, said second direction being opposite said first direction;
   activating the automated injection assembly to inject the eggs on the egg tray with a fluid in said injection position; and
   manually moving the supporting structure horizontally back to the loading position where the egg tray can be removed and a new egg tray loaded for a next automated injection sequence.

## Claims

1. A method of injecting eggs with a fluid comprising the step of injecting the eggs with an automated conditional *in ovo* injection machine, said machine comprising:
a support frame having a movable supporting structure mounted thereon, said movable supporting structure retaining an egg tray thereon and said movable supporting structure and said egg tray moving together laterally in a generally horizontal direction when said egg tray is retained on said support structure;
a plurality of fluid substance manifolds, each comprising: a fluid substance intake opening, to receive fluid substances from a reservoir; an opening to receive a common pneumatic signal; a plurality of openings to receive an individual pneumatic actuation signal; a plurality of spool valves; and a plurality of fluid substance output ports;
an injector assembly mounted on or coupled to said support frame and having a plurality of conditional *in ovo* injectors arranged in a generally rectangular, longitudinally extending matrix above said egg tray;
said plurality of conditional *in ovo* injectors being movable in a substantially vertical direction and having needles to inject eggs in said egg tray retained on and positioned by said supporting structure;
said supporting structure being movable between an injection position in which eggs in an egg tray retained on said supporting structure are positioned directly underneath and in vertical alignment with said injectors and a loading position in which said supporting structure and said egg tray retained thereon are positioned laterally away from said injectors, said supporting structure being movable back and forth between said injection and loading positions;
wherein each injector is equipped with a means for activating a pneumatic logic circuit, wherein when the injectors are moved down onto the eggs, or the eggs are moved up onto the injectors, the eggs physically contact and displace the injectors; and
wherein when an egg is not present, the injector's needle is not deployed and no liquid is administered to the egg.

2. The method of claim 1 wherein said *in ovo* injection machine comprises a fluid conduit, which is operably connected to an injector valve, one input of an "AND" valve, and the injector's needle.

3. The method of claim 1 or claim 2 wherein each conditional injector comprises at least one magnet, wherein when an egg displaces the conditional *in ovo* injector, a magnetic switch is caused to be turned on or off, depending upon the desired logic, which activates the pneumatic logic circuit.

4. The method of claim 3 wherein activation of the pneumatic logic circuit comprises actuation of the injector valve, which allows a pneumatic pressure to be applied to the fluid conduit, which causes the injector's needle to be deployed downward, into its corresponding egg, and also applies pressure to one of the two inputs of the "AND" valve.

5. The method of any one of claims 1 to 4 wherein when an egg is present, and the injector is in the injection position, the needle will be deployed, and the vaccine or other substance will be administered to the egg.

6. The method of any one of claims 1 to 5 comprising the steps of:
manually moving the supporting structure horizontally in a first direction to the loading position;
arranging at least one tray of eggs onto the supporting structure in said loading position;
manually moving the supporting structure horizontally in a second direction to the injection position, said second direction being opposite said first direction;
activating the automated injection assembly to inject the eggs on the egg tray with a fluid in said injection position; and
manually moving the supporting structure horizontally back to the loading position where the egg tray can be removed and a new egg tray loaded for a next automated injection sequence.
